# EUROPEAN PATENT SPECIFICATION

(11) **EP 2 626 941 B1**
(45) Date of publication and mention of the grant of the patent: **02.01.2019**
(21) Application number: 13154376.1
(22) Date of filing: 07.02.2013
(51) Int. Cl.: H01M 8/04

(54) **Fuel cell generation system**
Brennstoffzellen-Erzeugungssystem
Système de génération de pile à combustible

(30) Priority: 09.02.2012 US 201213369721
(43) Date of publication of application: 14.08.2013
(73) Proprietor: The Boeing Company, Chicago, IL 60606-1596 (US)
(72) Inventor: Breit, Joseph Sherman, Seattle, 98124 (US); Hahn, Steven E., Seattle, 98124 (US); Singh, Randeep, Tokyo, 134-8512 (JP); Mochizuki, Masataka, Tokyo, 134-8512 (JP); Mashiko, Koichi, Tokyo, 134-8512 (JP); Guo, Zhen, Tokyo, 134-8512 (JP)
(74) Representative: Witte, Weller & Partner Patentanwälte mbB

(56) References cited:
- WO-A2-2006/069173
- DE-A1-102008 024 826
- JP-A- 2004 127 625
- JP-A- 2005 078 970
- US-A1- 2006 269 807
- US-A1- 2010 221 627
- US-A1- 2011 059 346

## Description

### BACKGROUND

The present disclosure relates generally to heat transfer systems and, more particularly, to methods and systems for transferring heat produced by a fuel cell module positioned onboard an aircraft.

Known aircraft include a plurality of engines that generate lifting power. At least some known aircraft include electrical components that require electricity to operate. To provide electricity to such electrical components, at least some known aircraft extract power from the engines. However, supplying electricity from the engines to the electrical components increases an overall fuel consumption of the engine. To facilitate reducing electrical demand from the engines, at least some known aircraft include fuel cells that generate power for use in powering onboard electrical components. However, at least some known aircraft do not efficiently utilize electricity and/or byproducts generated by the fuel cell.

Document DE 10 2008 024 826 A1 shows a mobile room with an additional unit, comprising a fuel cell system and a sea water desalinating component of a desalination device for the desalination of water to be desalinated. The fuel cell system provides the desalination device occasionally or indirectly with a first energy that is a nonthermal energy form, and with a second energy, whose energy form is different from the energy form of the first energy, and provides the desalination device occasionally or indirectly with electric, thermal-, mechanic, hydraulic, pneumatic and/or chemical energy. The mobile room with an additional unit, comprises a fuel cell system and a sea water desalinating component of a desalination device for the desalination of water to be desalinated. The fuel cell system provides the desalination device occasionally or indirectly with a first energy that is a nonthermal energy form, and with a second energy, whose energy form is different from the energy form of the first energy, and provides the desalination device occasionally or indirectly with electric, thermal-, mechanic, hydraulic, pneumatic and/or chemical energy. The desalination is based on through-pressing of the water to be desalinated through a membrane. The desalination is based upon an evaporation of the water to be desalinated. The desalination device comprises two, three or more desalination steps and a filter for cleaning the water to be desalinated and is arranged for conventional-, cooling-, or drinking water extraction. The additional unit serves an air conditioner. The mobile room comprises a load compensation control that serves a power of the fuel cell system to such periods reinforces to lead to the desalination device in which a total thermal or electric power reduction of the energy consumers is lower than the fuel cell system in an optimal operation area. The mobile room comprises a water jet drive, whose water jet pump occasionally serves to press the water containing in the water to be desalinated through the membrane. The mobile room is a land vehicle, air craft, floatable device or a mobile or half mobile housing. An independent claim is included for a method for desalination of sea water by additional unit for air-conditioning and/or power supply.

### BRIEF SUMMARY

In one aspect, a method according to claim 1 is provided for transferring heat produced by a fuel cell module positioned onboard an aircraft. The method includes coupling a loop heat pipe (LHP) module to the fuel cell module. The LHP module includes a first fluid that absorbs the heat from the fuel cell module and is channeled through the LHP module.

In another aspect, a power generation system according to claim 2 is provided for use on an aircraft. The power generation system includes a fuel cell module configured to produce heat and a LHP module coupled to the fuel cell module. The LHP module includes a first fluid that absorbs the heat from the fuel cell module and is channeled through the LHP module.

In yet another aspect, a system according to claim 5 is provided. The system includes an aircraft and an electronic device positioned onboard the aircraft. A fuel cell module is coupled to the electronic device. The fuel cell module is configured to produce electricity and heat. The electricity is transmitted to the electronic device. A LHP module is coupled to the fuel cell module. The LHP module includes a first fluid that absorbs the heat from the fuel cell module and is channeled through the LHP module.

The features, functions, and advantages described herein may be achieved independently in various embodiments of the present disclosure or may be combined in yet other embodiments, further details of which may be seen with reference to the following description and drawings.

### BRIEF DESCRIPTION OF THE DRAWINGS

FIG. 1 is a plan view of an exemplary aircraft;
FIG. 2 is a schematic illustration of an exemplary fuel cell cogeneration system that may be used onboard the aircraft shown in FIG. 1;
FIG. 3 is a perspective view of an exemplary heat transfer system that may be used with the fuel cell cogeneration system shown in FIG. 2;
FIGS. 4-6 are schematic illustrations of other fuel cell cogeneration systems that may be used onboard the aircraft shown in FIG. 1.

Although specific features of various embodiments may be shown in some drawings and not in others, this is for convenience only. Any feature of any drawing may be referenced and/or claimed in combination with any feature of any other drawing.

### DETAILED DESCRIPTION

The subject matter described herein relates generally to heat transfer systems and, more particularly, to methods and systems for transferring heat produced by a fuel cell module positioned onboard an aircraft. In one embodiment, a power generation system onboard an aircraft includes a fuel cell module configured to produce heat and electricity. A loop heat pipe (LHP) module is coupled to the fuel cell module. The LHP module includes a first fluid (i.e., a working fluid) that absorbs the heat from the fuel cell module and is channeled through the LHP module. As such, the LHP module facilitates cooling the fuel cell module.

As used herein, the term "load" or "external load" refers to any device and/or machine that utilizes electricity, heat, water, and/or any other byproduct generated, created, and/or produced by another device and/or machine. An element or step recited in the singular and proceeded with the word "a" or "an" should be understood as not excluding plural elements or steps unless such exclusion is explicitly recited. Moreover, an element or step recited in the singular and proceeded with the word "a" or "an" should be understood as not excluding plural elements or steps unless such exclusion is explicitly recited. Moreover, references to "one embodiment" of the present invention and/or the "exemplary embodiment" are not intended to be interpreted as excluding the existence of additional embodiments that also incorporate the recited features.

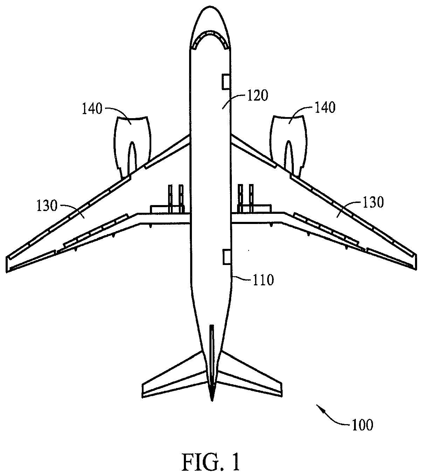

FIG. 1 is a plan view of an exemplary aircraft 100. In the exemplary embodiment, aircraft 100 includes a body 110 that includes a fuselage 120 and a pair of wings 130 extending from fuselage 120. In the exemplary embodiment, at least one engine 140 is coupled to each wing 130 to provide thrust to aircraft 100. Aircraft 100 may include any number of engines 140 that enables aircraft 100 to function as described herein. In the exemplary embodiment, aircraft 100 includes at least one component and/or structure that is fabricated from a composite material.

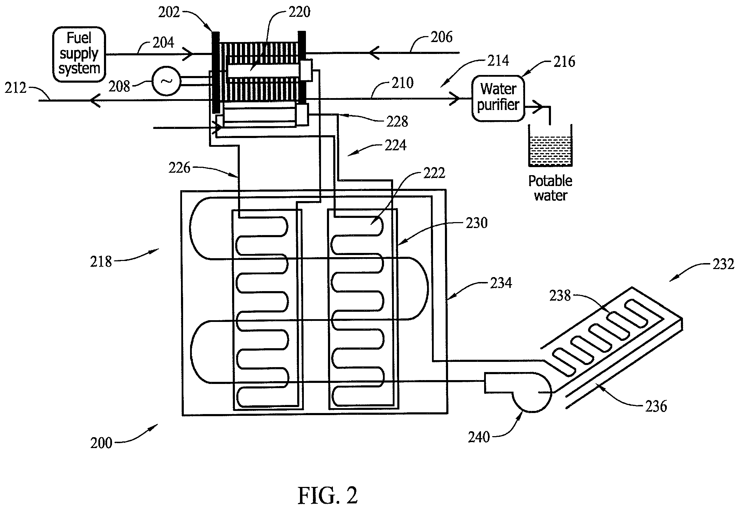

FIG. 2 is a schematic illustration of an exemplary fuel cell cogeneration system 200 that may be used onboard aircraft 100 (shown in FIG. 1). In the exemplary embodiment, system 200 integrates electric, heat, and water systems into a single system. In the exemplary embodiment, system 200 includes a fuel cell module 202 that converts fuel 204 and air 206 into electricity 208 that may be used within aircraft 100. In the exemplary embodiment, byproducts of fuel cell module 202 include water 210, air 212, and thermal energy or heat (not shown). In the exemplary embodiment, system 200 includes a conduit 214 that is in flow communication with fuel cell module 202, and a water purifier 216 that is coupled to conduit 214. In the exemplary embodiment, water purifier 216 facilitates increasing a drinking quality of water 210 channeled therethrough such that water 210 may be potable.

In the exemplary embodiment, system 200 includes a heat transfer module or loop heat pipe (LHP) module 218. In the exemplary embodiment, LHP module 218 includes an evaporator 220, a condenser 222, and a heat transfer loop 224. In the exemplary embodiment, evaporator 220 includes a fine pore wick structure for capillary pumping of the fluid and circulation inside LHP module 218. In the exemplary embodiment, evaporator 220 is coupled directly to fuel cell module 202 to absorb heat generated by fuel cell module 202. Alternatively, evaporator 220 may have any configuration and/or be coupled to any device and/or element that enables system 200 to function as described herein.

In the exemplary embodiment, heat transfer loop 224 includes a vapor line 226 that channels vapor from evaporator 220 towards condenser 222, and a liquid line 228 that channels liquid from condenser 222 towards evaporator 220. That is, in the exemplary embodiment, LHP module 218 is a two-phase heat transfer device that uses capillary action to remove heat from fuel cell module 202 and passively transfer the heat to condenser 222.

In the exemplary embodiment, a load 230 is coupled to condenser 222 such that the heat may be used onboard aircraft 100. For example, load 230 may be an appliance including, but not limited to, a coffee maker, a hot water faucet, and/or an oven. Alternatively, load 230 may be any other appliance and/or device that enables system 200 to function as described herein.

In the exemplary embodiment, a second heat transfer module 232 is coupled to LHP module 218. In the exemplary embodiment, second heat transfer module 232 includes a heat spreader 234, a radiator 236, and a fluid line 238 extending therebetween. In the exemplary embodiment, heat spreader 234 is configured to absorb heat from condenser 222 and transfer the heat to fluid channeled through fluid line 238. In the exemplary embodiment, second heat transfer module 232 includes a pump 240 such that fluid is actively channeled through fluid line 238. Alternatively, second heat transfer system 232 may be a passive system such that heat is passively transferred between heat spreader 234 and radiator 236. In the exemplary embodiment, radiator 236 is positioned such that heat may be transferred to the ambient environment.

During operation, fuel cell module 202 receives fuel 204 and air 206 and generates and/or produces electricity 208, water 210, air 212, and/or heat. In the exemplary embodiment, water 210 is channeled through conduit 214, and water purifier 216 makes water 210 potable.

In the exemplary embodiment, evaporator 220 absorbs heat from fuel cell module 202 as fluid is channeled through heat transfer loop 224. More specifically, in the exemplary embodiment, liquid channeled through evaporator 220 absorbs heat from fuel cell module 202 to enable the liquid to change into a vapor. That is, in the exemplary embodiment, heat absorbed at evaporator 220 enables the liquid to convert into vapor through a phase-change process. In the exemplary embodiment, the vapor is discharged from evaporator 220 and channeled through vapor line 226 towards condenser 222. As such, in the exemplary embodiment, heat is transported to condenser 222. In the exemplary embodiment, heat is transferred from condenser 222 towards load 230 and/or heat spreader 234 to enable the vapor to change into a liquid. That is, in the exemplary embodiment, the phase-change process takes place after the vapor gives out its latent heat. In the exemplary embodiment, the liquid is discharged from condenser 222 and channeled through liquid line 228 towards evaporator 220.

In the exemplary embodiment, second heat transfer module 232 is selectively operated to transfer heat from LHP module 218 into the ambient environment. That is, in the exemplary embodiment, pump 240 is not activated when the heat is being used by load 230, and is activated when the heat is not being used by load 230.

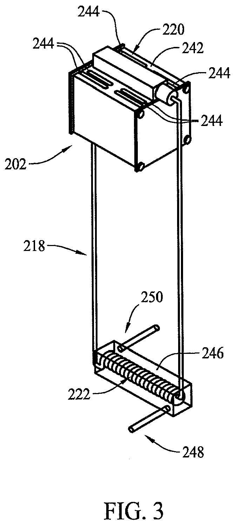

FIG. 3 is a perspective view of fuel cell module 202 and LHP module 218. In the exemplary embodiment, LHP module 218 includes a heat spreader 242 coupled directly to fuel cell module 202, and heat pipes 244 coupled to heat spreader 242 and evaporator 220. In the exemplary embodiment, heat spreader 242 and/or heat pipes 244 increase the heat transfer rate between fuel cell module 202 and LHP module 218. As such, heat may be transferred from fuel cell module 202 to evaporator 220 for capillary pumping. In the exemplary embodiment, heat spreader 242 and/or heat pipes 244 include wire wick and/or sintered wick. Alternatively, heat spreader 242 and/or heat pipes 244 may have any configuration and/or be fabricated from any material that enables system 200 to function as described herein.

In the exemplary embodiment, condenser 222 is positioned within a container 246 configured to channel water therethrough. More specifically, in the exemplary embodiment, container 246 includes an inlet 248 configured to receive water, and an outlet 250 configured to discharge water. In the exemplary embodiment, water is channeled through container 246 to facilitate cooling condenser 222 and/or fluid channeled through LHP module 218.

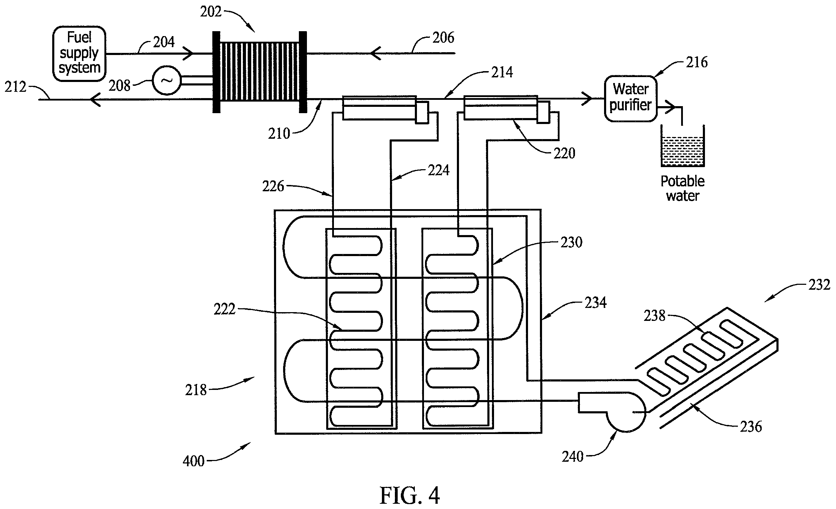

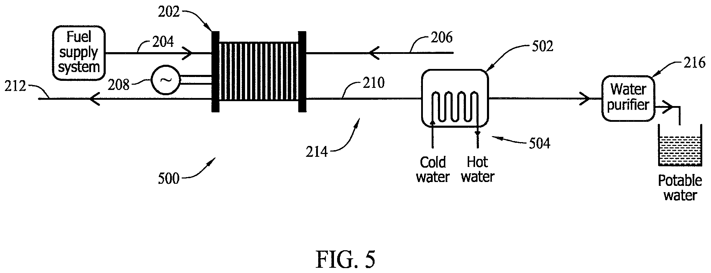

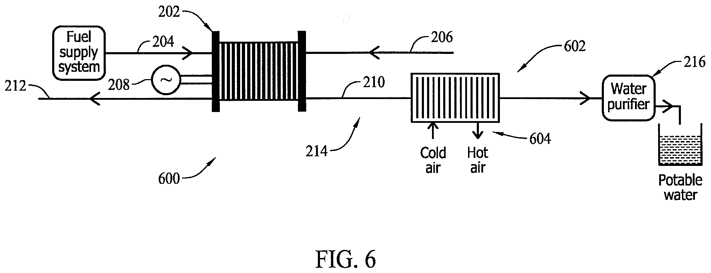

FIGS. 4-6 are schematic illustrations of other fuel cell cogeneration systems 400, 500, and 600 that may be used onboard aircraft 100. System 400 is generally similar to system 200, but, instead of LHP module 218 being coupled directly to fuel cell module 202, LHP module 218 is coupled directly to conduit 214 to facilitate absorbing, using, and/or dissipating heat generated by fuel cell module 202.

System 500 is generally similar to system 200, but, instead of LHP module 218, a liquid-to-liquid heat exchanger 502 is coupled to conduit 214 to facilitate absorbing, using, and/or dissipating heat generated by fuel cell module 202. In the exemplary embodiment, heat exchanger 502 includes a conduit 504 extending therethrough that channels cold water into heat exchanger 502, wherein the water absorbs heat from conduit 214 and/or water 210 within conduit 214 such that hot water may be discharged from heat exchanger 502 through conduit 504.

System 600 is generally similar to system 200, but, instead of LHP module 218, a liquid-to-air heat exchanger 602 is coupled to conduit 214 to facilitate absorbing, using, and/or dissipating heat generated by fuel cell module 202. In the exemplary embodiment, heat exchanger 602 includes a conduit 604 extending therethrough that channels cold air into heat exchanger 602, wherein the air absorbs heat from conduit 214 and/or water 210 within conduit 214 such that hot air may be discharged from heat exchanger 602 through conduit 604.

The embodiments described herein relate generally to heat transfer systems and, more particularly, to methods and systems for transferring heat produced by a fuel cell module positioned onboard an aircraft. The embodiments described herein facilitate increasing fuel cell efficiency for use in an airplane galley and/or decreasing a quantity of airplane generated power required to operate the airplane during flight. As such, the embodiments described herein facilitate decreasing an amount of power used by galleys through energy storage, use of combined heat and power from fuel cells, and efficient transfer of the heat from the fuel cell to galley insert loads.

Exemplary embodiments of methods and systems for transferring heat in an aircraft environment are described above in detail. The methods and systems are not limited to the specific embodiments described herein, but rather, components of systems and/or steps of the method may be utilized independently and separately from other components and/or steps described herein. Each method step and each component may also be used in combination with other method steps and/or components. Although specific features of various embodiments may be shown in some drawings and not in others, this is for convenience only. Any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method of transferring heat produced by a fuel cell module positioned onboard an aircraft, said method comprising:
coupling a loop heat pipe (LHP) module (218) to the fuel cell module (202), the LHP module (218) including a first fluid;
channeling the first fluid through the LHP module (218), wherein the first fluid absorbs the heat from the fuel cell module (202);
transferring the heat to an external load (230), wherein the external load (230) is a device and/or machine that utilizes the heat produced by the fuel cell module;
coupling a heat transfer module (232) to the LHP module, the heat transfer module (232) including a second fluid; and
channeling the second fluid through the heat transfer module, wherein the second fluid absorbs the heat from the LHP module (218), wherein channeling the second fluid further comprises selectively pumping the second fluid through the heat transfer module, **characterized in that**
the LHP module (218) includes an evaporator (220), a condenser (222) and a heat transfer loop (224), wherein the heat transfer loop (224) includes a vapor line (226) that channels vapor from evaporator (220) towards condenser (222) and a liquid line (228) that channels liquid from condenser (222) towards evaporator (220);
wherein the heat transfer module (232) includes a heat spreader (234), a radiator (236) and a fluid line (238), wherein the heat spreader is configured to absorb heat from the condenser (222) and transfer the heat to fluid channeled through the fluid line (238), wherein the radiator is positioned such that heat may be transferred to ambient environment;
wherein the heat transfer module (232) is selectively operated to transfer heat from said LHP module (218) into ambient environment; and
wherein a pump (240) is not activated when the heat is being used by said external load (230), and is activated when the heat is not being used by said load (230).

2. A power generation system (200) for use on an aircraft (100), said power generation system comprising:
a fuel cell module (202) configured to produce heat;
a loop heat pipe (LHP) module (218) coupled to said fuel cell module, said LHP module comprising a first fluid that absorbs the heat from said fuel cell module and is channeled through said LHP module;
an external load (230) coupled to said LHP module, wherein the external load (230) is a device and/or machine that utilizes the heat produced by the fuel cell module wherein the heat is transferred to said external load;
a heat transfer module (232) coupled to said LHP module, said heat transfer module comprising a second fluid that absorbs the heat from said LHP module and is channeled through the heat transfer module, wherein said heat transfer module further comprises a pump configured to selectively channel the second fluid through said heat transfer module, **characterized in that**
the LHP module (218) includes an evaporator (220), a condenser (222) and a heat transfer loop (224), wherein the heat transfer loop (224) includes a vapor line (226) that channels vapor from evaporator (220) towards condenser (222) and a liquid line (228) that channels liquid from condenser (222) towards evaporator (220);
wherein the heat transfer module (232) includes a heat spreader (234), a radiator (236) and a fluid line (238), wherein the heat spreader is configured to absorb heat from the condenser (222) and transfer the heat to fluid channeled through the fluid line (238), wherein the radiator is positioned such that heat may be transferred to ambient environment;
the heat transfer module (232) is configured to be selectively operated to transfer heat from said LHP module (218) into ambient environment; and
**characterized in that** the system is configured so that a pump (240) is not activated when the heat is being used by said external load (230), and is activated when the heat is not being used by said load (230).

3. A power generation system in accordance with claim 2, wherein said LHP module further comprises a heat spreader that facilitates transferring the heat to an external load.

4. A power generation system in accordance with claim 2 or 3, further comprising a fluid transfer module comprising a water purifier (216) coupled to said fuel cell module, said fuel cell module configured to discharge water through said fluid transfer module.

5. An aircraft (100), comprising:
an electronic device positioned onboard said aircraft (100); and
a power generation system (200) according to any of claims 2 to 4;
wherein said fuel cell module (202) is coupled to said electronic device, said fuel cell module being configured to produce electricity and heat, wherein the electricity is transmitted to said electronic device.

## Patentansprüche

1. Verfahren zum Übertragen von Wärme, die von einem Brennstoffzellenmodul erzeugt ist, das an Bord eines Luftfahrzeugs positioniert ist, wobei das Verfahren folgende Schritte aufweist:
Koppeln eines Kreislaufwärmerohr(LHP)-Moduls (218) zu dem Brennstoffzellenmodul (202), wobei das LHP-Modul (218) ein erstes Fluid aufweist;
Kanalisieren des ersten Fluids durch das LHP-Modul (218), wobei das erste Fluid die Wärme von dem Brennstoffzellenmodul (202) aufnimmt;
Übertragen der Wärme zu einer externen Last (230), wobei die externe Last (230) eine Einrichtung und/oder Maschine ist, die die durch das Brennstoffzellenmodul erzeugte Wärme nutzt;
Koppeln eines Wärmeübertragungsmoduls (232) zu dem LHP-Modul, wobei das Wärmeübertragungsmodul (232) ein zweites Fluid aufweist; und
Kanalisieren des zweiten Fluids durch das Wärmeübertragungsmodul, wobei das zweite Fluid die Wärme von dem LHP-Modul (218) aufnimmt, wobei das Kanalisieren des zweiten Fluids des Weiteren das wahlweise Pumpen des zweiten Fluids durch das Wärmeübertragungsmodul aufweist, **dadurch gekennzeichnet, dass**
das LHP-Modul (218) einen Verdampfer (220), einen Kondensator (222) und einen Wärmeübertragungskreislauf (224) aufweist, wobei der Wärmeübertragungskreislauf (224) eine Dampfleitung (226), die den Dampf von dem Verdampfer (220) in Richtung des Kondensators (222) kanalisiert und eine Flüssigkeitsleitung (228) aufweist, die die Flüssigkeit von dem Kondensator (222) in Richtung des Verdampfers (220) kanalisiert;
wobei das Wärmeübertragungsmodul (232) einen Wärmeverteiler (234), einen Radiator (236) und eine Fluidleitung (238) aufweist, wobei der Wärmeverteiler dazu konfiguriert ist, Wärme von dem Kondensator (222) aufzunehmen und die Wärme auf Fluid zu übertragen, das durch die Fluidleitung (238) kanalisiert ist, wobei der Radiator derart positioniert ist, dass Wärme in die Umgebung übertragen werden kann;
wobei das Wärmeübertragungsmodul (232) wahlweise dazu betrieben wird, Wärme von dem LHP-Modul (218) in die Umgebung zu übertragen; und
wobei eine Pumpe (240) nicht aktiviert wird, wenn die Wärme von der externen Last (230) genutzt wird, und aktiviert wird, wenn die Wärme nicht von der Last (230) genutzt wird.

2. Wärmeerzeugungssystem (200) zur Nutzung in einem Luftfahrzeug (100), wobei das Wärmeerzeugungssystem Folgendes aufweist:
ein Brennstoffzellenmodul (202), das dazu konfiguriert ist, Wärme zu erzeugen;
ein Kreislaufwärmerohr(LHP)-Modul (218), das mit dem Brennstoffzellenmodul gekoppelt ist, wobei das LHP-Modul ein erstes Fluid aufweist, das die Wärme von dem Brennstoffzellenmodul aufnimmt und durch das LHP-Modul kanalisiert ist;
eine externe Last (230), die mit dem LHP-Modul gekoppelt ist, wobei die externe Last (230) eine Einrichtung und/oder Maschine ist, die die durch das Brennstoffzellenmodul erzeugte Wärme nutzt, wobei die Wärme zu der externen Last übertragen ist;
ein Wärmeübertragungsmodul (232), das mit dem LHP-Modul gekoppelt ist, wobei das Wärmeübertragungsmodul ein zweites Fluid aufweist, das die Wärme von dem LHP-Modul aufnimmt und durch das Wärmeübertragungsmodul kanalisiert ist, wobei das Wärmeübertragungsmodul des Weiteren eine Pumpe aufweist, um wahlweise das zweite Fluid durch das Wärmeübertragungsmodul zu kanalisieren, **dadurch gekennzeichnet, dass**
das LHP-Modul (218) einen Verdampfer (220), einen Kondensator (222) und einen Wärmeübertragungskreislauf (224) aufweist, wobei der Wärmeübertragungskreislauf (224) eine Dampfleitung (226) aufweist, die Dampf von dem Verdampfer (220) in Richtung des Kondensators (222) kanalisiert und eine Flüssigkeitsleitung (228) aufweist, die Flüssigkeit von dem Kondensator (222) in Richtung des Verdampfers (220) kanalisiert;
wobei das Wärmeübertragungsmodul (232) einen Wärmeverteiler (234), einen Radiator (236) und eine Flüssigkeitsleitung (238) aufweist, wobei der Wärmeverteiler dazu konfiguriert ist, Wärme von dem Kondensator (222) aufzunehmen und die Wärme zu einem Fluid zu übertragen, das durch die Fluidleitung (238) kanalisiert ist, wobei der Radiator derart positioniert ist, dass Wärme in die Umgebung übertragen werden kann;
wobei das Wärmeübertragungsmodul (232) dazu konfiguriert ist, wahlweise dazu betrieben zu werden, Wärme von dem LHP-Modul (218) in die Umgebung zu übertragen;
**dadurch gekennzeichnet, dass** das System dazu konfiguriert ist, dass eine Pumpe (240) nicht aktiviert ist, wenn die Wärme von der externen Last (230) genutzt wird und aktiviert ist, wenn die Wärme nicht von der externen Last (230) genutzt wird.

3. Leistungserzeugungssystem nach Anspruch 2, wobei das LHP-Modul des Weiteren einen Wärmeverteiler aufweist, der das Übertragen der Wärme zu einer externen Last vereinfacht.

4. Leistungserzeugungssystem nach Anspruch 2 oder 3, des Weiteren mit einem Fluidübertragungsmodul, das einen Wasseraufbereiter (216) aufweist, der mit dem Brennstoffzellenmodul gekoppelt ist, wobei das Brennstoffzellenmodul dazu konfiguriert ist, Wasser durch das Fluidübertragungsmodul abzugeben.

5. Luftfahrzeug (100), mit:
einer elektronischen Einrichtung, die am Bord des Luftfahrzeugs (100) angeordnet ist; und
einem Leistungserzeugungssystem (200) nach einem der Ansprüche 2 bis 4;
wobei das Brennstoffzellenmodul (202) mit der elektronischen Einrichtung gekoppelt ist, wobei das Brennstoffzellenmodul dazu konfiguriert ist, Elektrizität und Wärme zu erzeugen, wobei die Elektrizität an die elektronische Einrichtung übertragen ist.

## Revendications

1. Procédé de transfert de chaleur produite par un module de pile à combustible positionné à bord d'un aéronef, ledit procédé comprenant :
le couplage d'un module de caloduc en boucle (LHP) (218) au module de pile à combustible (202), le module LHP (218) comportant un premier fluide ;
la canalisation du premier fluide à travers le module LHP (218), le premier fluide absorbant la chaleur issue du module de pile à combustible (202) ;
le transfert de la chaleur à une charge externe (230), la charge externe (230) étant un dispositif et/ou une machine qui utilisent la chaleur produite par le module de pile à combustible ;
le couplage d'un module de transfert de chaleur (232) au module LHP, le module de transfert de chaleur (232) comportant un deuxième fluide ; et
la canalisation du deuxième fluide à travers le module de transfert de chaleur, le deuxième fluide absorbant la chaleur issue du module LHP (218), la canalisation du deuxième fluide comprenant en outre le pompage sélectif du deuxième fluide à travers le module de transfert de chaleur, **caractérisé en ce que**
le module LHP (218) comporte un évaporateur (220), un condenseur (222) et une boucle de transfert de chaleur (224), la boucle de transfert de chaleur (224) comportant une conduite de vapeur (226) qui canalise de la vapeur issue de l'évaporateur (220) vers le condenseur (222) et une conduite de liquide (228) qui canalise un liquide issu du condenseur (222) vers l'évaporateur (220) ;
dans lequel le module de transfert de chaleur (232) comporte un diffuseur de chaleur (234), un radiateur (236) et une conduite de fluide (238), le diffuseur de chaleur étant configuré pour absorber de la chaleur issue du condenseur (222) et transférer la chaleur à un fluide canalisé à travers la conduite de fluide (238), le radiateur étant positionné de telle sorte que de la chaleur peut être transférée à un environnement ambiant ;
dans lequel le module de transfert de chaleur (232) est sélectivement utilisé pour transférer de la chaleur issue dudit module LHP (218) dans un environnement ambiant ; et
dans lequel une pompe (240) n'est pas activée quand la chaleur est utilisée par ladite charge externe (230), et est activée quand la chaleur n'est pas utilisée par ladite charge (230).

2. Système de production d'énergie (200) pour utilisation sur un aéronef (100), ledit système de production d'énergie comprenant :
un module de pile à combustible (202) configuré pour produire de la chaleur ;
un module de caloduc en boucle (LHP) (218) couplé audit module de pile à combustible, ledit module LHP comprenant un premier fluide qui absorbe la chaleur issue dudit module de pile à combustible et est canalisé à travers ledit module LHP ;
une charge externe (230) couplée audit module LHP, la charge externe (230) étant un dispositif et/ou une machine qui utilisent la chaleur produite par le module de pile à combustible, la chaleur étant transférée à ladite charge externe ;
un module de transfert de chaleur (232) couplé audit module LHP, ledit module de transfert de chaleur comprenant un deuxième fluide qui absorbe la chaleur issue dudit module LHP et est canalisé à travers le module de transfert de chaleur, ledit module de transfert de chaleur comprenant en outre une pompe configurée pour canaliser sélectivement le deuxième fluide à travers ledit module de transfert de chaleur, **caractérisé en ce que**
le module LHP (218) comporte un évaporateur (220), un condenseur (222) et une boucle de transfert de chaleur (224), la boucle de transfert de chaleur (224) comportant une conduite de vapeur (226) qui canalise de la vapeur issue de l'évaporateur (220) vers le condenseur (222) et une conduite de liquide (228) qui canalise un liquide issu du condenseur (222) vers l'évaporateur (220) ;
dans lequel le module de transfert de chaleur (232) comporte un diffuseur de chaleur (234), un radiateur (236) et une conduite de fluide (238), le diffuseur de chaleur étant configuré pour absorber de la chaleur issue du condenseur (222) et transférer la chaleur à un fluide canalisé à travers la conduite de fluide (238), le radiateur étant positionné de telle sorte que de la chaleur peut être transférée à un environnement ambiant ;
le module de transfert de chaleur (232) est configuré pour être sélectivement utilisé pour transférer de la chaleur issue dudit module LHP (218) dans un environnement ambiant ; et
**caractérisé en ce que**
le système est configuré de telle sorte qu'une pompe (240) n'est pas activée quand la chaleur est utilisée par ladite charge externe (230), et est activée quand la chaleur n'est pas utilisée par ladite charge (230).

3. Système de production d'énergie selon la revendication 2, dans lequel ledit module LHP comprend en outre un diffuseur de chaleur qui facilite le transfert de la chaleur à une charge externe.

4. Système de production d'énergie selon l'une quelconque de la revendication 2 ou 3, comprenant en outre un module de transfert de fluide comprenant un purificateur d'eau (216) couplé audit module de pile à combustible, ledit module de pile à combustible configuré pour déverser de l'eau à travers ledit module de transfert de fluide.

5. Aéronef (100), comprenant :
un dispositif électronique positionné à bord dudit aéronef (100) ; et
un système de production d'énergie (200) selon l'une quelconque des revendications 2 à 4 ;
dans lequel ledit module de pile à combustible (202) est couplé audit dispositif électronique, ledit module de pile à combustible étant configuré pour produire de l'électricité et de la chaleur, l'électricité étant transmise audit dispositif électronique.
